Europäisches Patentamt

**European Patent Office** (11) Veröffentlichungsnummer: **0 033 368**
**B1**
Office européen des brevets

(12) **EUROPÄISCHE PATENTSCHRIFT**

(45) Veröffentlichungstag der Patentschrift: (51) Int Cl.³ **H 02 H 3/20,** H 02 H 7/20,
**19.09.84** H 03 K 17/08

(21) Anmeldenummer: **80107175.4**

(22) Anmeldetag: **19.11.80**

(54) Verfahren zum Schutz eines Gleichspannungswandlers vor zu hohen Spannungen.

(30) Priorität: **31.01.80 DE 3003382**

(43) Veröffentlichungstag der Anmeldung:
**12.08.81 Patentblatt 81/32**

(45) Bekanntmachung des Hinweises auf die Patenterteilung:
**19.09.84 Patentblatt 84/38**

(84) Benannte Vertragsstaaten:
**AT BE DE NL**

(56) Entgegenhaltungen:
**FR - A - 2 291 647**
**FR - A - 2 393 453**
**FR - A - 2 409 625**
**US - A - 3 454 834**
**US - A - 4 156 273**

(73) Patentinhaber: **ANT Nachrichtentechnik GmbH,**
**Gerberstrasse 33, D-7150 Backnang (DE)**

(72) Erfinder: **Freye, Klaus-Dieter, Südstrasse 137,**
**D-7150 Backnang (DE)**

(74) Vertreter: **Schickle, Gerhard, Dipl.-Ing. et al, ANT**
**Nachrichtentechnik GmbH Patent- und Lizenzabteilung**
**Gerberstrasse 33, D-7150 Backnang (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft ein Verfahren zum Schutz eines impulsbreitengesteuerten Transistor-Gleichspannungswandlers vor zu hohen Spannungen gemäß dem Oberbegriff des Patentanspruchs 1. Eine Einrichtung, die auf einem solchen Verfahren beruht, ist bekannt aus der FR-A-2 291 647.

Bei der FR-A-2 291 647 wird die Ausgangsspannung des Gleichspannungswandlers jedoch auf zwei verschiedenen Wegen erfaßt. Über ein Potentiometer wird eine Spannung proportional zur Ausgangsspannung erfaßt und zur Regelung des Gleichspannungswandlers herangezogen. Eine Überspannungs-Schutzfunktion im eigentlichen Sinne erfüllt diese Maßnahme nicht, da nur das Tastverhältnis zur Ansteuerung des Schalttransistors reduziert wird, aber keine Vorsorge gegen das erneute Wiedereinschalten des Schalttransistors bei bestehender Überspannung im Regelkreis getroffen ist. Zur Überspannungsschutzschaltung ist bei diesem Gleichspannungswandler eine vom Regelkreis getrennte Einrichtung vorgesehen. Mittels eines Thyristors, der als Folge einer Überspannung zündbar ist, ist ein dauerndes Abschalten des Gleichspannungswandlers möglich. Eine erneute Betriebnahme ist hier erst durch kurzzeitiges Abtrennen der den Wandler speisenden Spannungsquelle möglich, da zunächst der Thyristor durch Unterschreiten des Haltestromes gelöscht werden muß. Abgesehen davon, daß die Ausgangsspannung zur Steuerung des Schalttransistors und die Erfassung der ausgangsseitigen Überspannung schaltungsaufwendig auf getrennten Wegen erfolgt, gibt die FR-A-2 291 647 keine Anregung, wie auch eingangsseitige Überspannungen in den Überspannungsschutz einbezogen werden können, um insbesondere:

— einen vollständigen Schutz der Leistungshalbleiter im primären und im sekundären Wechselstromkreis gegen eingangsseitige Überspannungen zu gewährleisten,
— Regelschleifen-Störungen zu verhindern, die zu einem Anstieg der Ausgangsspannung führen, ohne daß ein vorübergehendes Versagen der Regelschleife mit einem dauernden Ausfall der Stromversorgungsfunktion verbunden ist,
— dafür Sorge zu tragen, daß von der Verbraucherseite extern verursachte, vorübergehende Spannungsübererhöhungen nicht zu einer andauernden Blockierung der Versorgung dieser Verbraucher durch die Schutzschaltung führen.

Aus der DE-A-2 445 032 ist eine Schaltungsanordnung bekannt, bei der die Eingangsspannung über einen Widerstand einen ersten Kondensator auflädt. Die daran abfallende Spannung wird zusammen mit einer Referenzspannung einem Vergleichsverstärker zugeführt, dessen Ausgangssignal den Schalttransistor beeinflußt. Bei Überschreiten eines vorgegebenen Höchstwertes der Eingangsspannung wird durch eine Spannungsmeßeinrichtung ein Aufladen des Kondensators verhindert. Diese Schaltungsanordnung ist ebenfalls sehr aufwendig.

Die Erfindung stellt sich daher die Aufgabe, ein Verfahren gemäß dem Oberbegriff des Patentanspruchs 1 derart auszubilden, daß damit eine einfachere und universell einsetzbare Schaltung realisierbar ist.

Erfindungsgemäß wird diese Aufgabe durch die kennzeichnenden Merkmale des Anspruchs 1 gelöst.

Vorteilhafte Schaltungsanordnungen zum Durchführen des erfindungsgemäßen Verfahrens sind in den Unteransprüchen gekennzeichnet.

Bei eingangsseitigen Überspannungen wird so eine Gefährdung des Schalttransistors vermieden, da er nun wegen des Wegfalls der Rückschlagspannung nur eine kleinere Spannung aushalten muß. Eine dauernde Blockierung des Gleichspannungswandlers wird wirksam verhindert.

Bei ausgangsseitiger Überspannung wird nach Wegfall der Überspannung der Schalttransistor verzögert wieder eingeschaltet, beispielsweise dadurch, daß ein Teil der Steuerschaltung, der für sanften Ablauf sorgt, in Tätigkeit tritt. Die Verzögerung ist dabei so zu dimensionieren, daß der Mittelwert der Ausgangsspannung niedriger als der Nennwert liegt.

Besonders vorteilhaft an dem erfindungsgemäßen Verfahren ist die Reduzierung der Sperrbeanspruchung der Stelltransistoren und Leitungsdioden im Falle überhöhter Eingangsspannung des Gleichspannungswandlers.

Erfahrungsgemäß sind die Stelltransistoren die kritischsten Bauteile in bezug auf überhöhte Eingangsspannungen. Die Ursache dafür ist, daß als Sperrspannung mehr als der doppelte Wert der angelegten Spannung auftreten kann. Eine optimale Dimensionierung hinsichtlich der Schaltereigenschaften führt aber praktisch immer zu einem Stelltransistor mit möglichst hohen zulässigen Spitzenströmen und möglichst geringer Sperrspannung. Nach der VDE-Bestimmung 0160 muß die Funktionsfähigkeit der Geräte kurzzeitig bis zum doppelten Nennwert der angelegten Spannung sichergestellt sein. Bis zum 2,5fachen Nennwert dürfen keine Beschädigungen auftreten. Diese Anforderungen haben zur Folge, daß die Stelltransistoren oftmals hinsichtlich der Sperrspannung ungünstig dimensioniert werden müssen. Durch Streuinduktivitäten treten beim Abschalten zusätzliche Spannungsspitzen auf, die bei der Dimensionierung der Bauteile mitzuberücksichtigen sind.

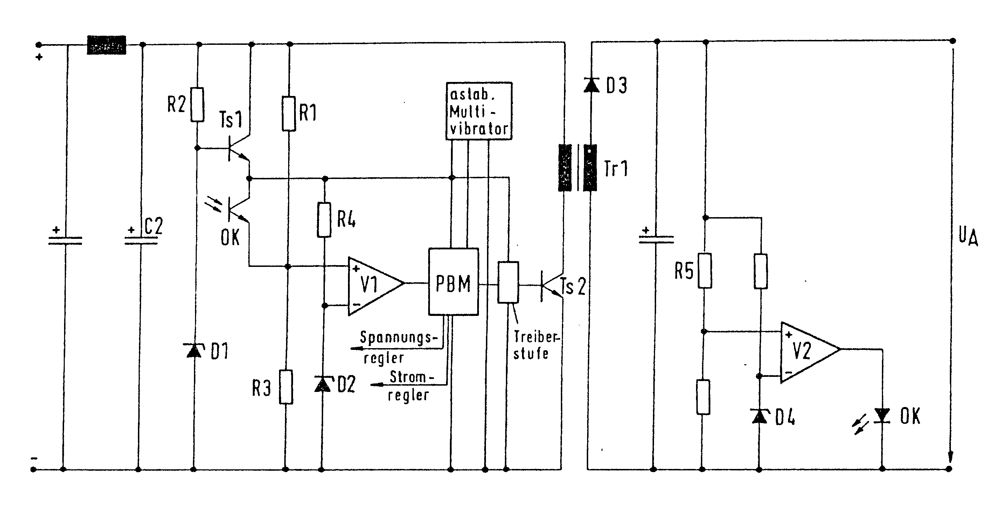

Anhand der Zeichnung wird die Erfindung näher erläutert. Dabei zeigt

die Figur ein Prinzipschaltbild eines erfindungsgemäßen Gleichspannungswandlers.

Bei ausgangsseitigen Überspannungen, z. B.

bei Regelschleifen-Störungen, wird die Ausgangsspannung $U_A$ über den Widerstand R5 einem ersten Eingang der zweiten Vergleichseinrichtung V2 zugeführt. Am zweiten Eingang der Vergleichseinrichtung V2 liegt die Referenzspannung Uref der Zenerdiode D4. Der Ausgang der Vergleichseinrichtung V2 ist mit einem Optokoppler OK verbunden. Dieser spricht an, wenn die Ausgangsspannung $U_A$ die an der Zenerdiode D4 anliegende Referenzspannung Uref überschreitet. Über den Optokoppler OK wird also nur eine von der Ausgangsspannung $U_A$ abgeleitete Größe an die erste Vergleichseinrichtung V1 als Teil der Istspannung geführt. Die Empfangseinrichtung des Optokopplers OK besteht aus einem Phototransistor, dessen Emitter mit dem ersten Eingang der Vergleichseinrichtung V1 verbunden ist. Zur Spannungsversorgung des Phototransistors ist dieser kollektorseitig mit der aus Transistor Ts1, Widerstand R2, Zenerdiode D1 bestehenden internen Versorgungsspannungsstufe verbunden.

Die Referenzspannung der ersten Vergleichseinheit V1 wird durch die an der Zenerdiode D2 anstehende Spannung gebildet. Die Zenerdiode D2 wird über den Widerstand R4 aus der internen Versorgungsspannungsstufe gespeist.

Bei eingangsseitigen Überspannungen wird die Eingangsspannung über den Spannungsteiler, bestehend aus den Widerständen R1 und R3 mit der Referenzspannung verglichen. Bei zu hohen Eingangsspannungen blockiert die Vergleichseinrichtung V1 die Steuereinheit (Pulsbreitenmodulator PBM), die wiederum den Stelltransistor Ts2 unverzögert abschaltet. Damit entfällt sofort die durch Streuinduktivitäten normalerweise auftretende Spannungsspitze, so daß nunmehr eine Sperrbeanspruchung von maximal doppelter Versorgungsspannung im Stelltransistor auftritt. Hierbei sei auf die Einflüsse der Eingangs-Siebschaltung sowie des Innenwiderstandes der Stromverteilungsanlage hingewiesen, die einen steilen Anstieg des Überspannungsimpulses am Eingangskondensator C2 verhindern, so daß bis zur völligen Energieabgabe vom Transformator Tr1 nur ein geringer Anstieg der Eingangsspannung am Eingangskondensator C2 auftritt. Nach der sehr schnell erfolgenden Energieabgabe des Transformators Tr1 bricht die am Stelltransistor Ts2 auftretende Sperrspannung auf den Wert der Eingangsspannung zusammen, d. h. sie beträgt nunmehr im ungünstigsten nach VDE 0160 zu berücksichtigenden Fall genau die Eingangsspannung, d. h. für den Stelltransistor ist ein Typ mit erheblich geringerer Sperrspannung verwendbar.

Klingt die Überspannung auf einen Wert ab, der unterhalb der oberen Toleranzgrenze der Eingangsspannung liegt, so wird durch die Vergleichseinheit V1 der Pulsbreitenmodulator PBM freigegeben, und der Schaltregler läuft automatisch wieder an. Die nach VDE 0160 geforderte Funktionsfähigkeit bei 2facher Nennspannung ist damit erreicht, obwohl der Stelltransistor Ts2 und die Diode D3 praktisch nur für Nennbedingungen dimensioniert sind. Eine zusätzliche, den Betrieb andauernd unterbrechende Schutzeinrichtung für 2—2,5fache Nennspannung ist in den meisten Fällen nicht mehr erforderlich.

Für die Vergleichseinrichtung V1 bzw. V2 können Differenzverstärker oder Schaltungen mit bistabilen Gliedern eingesetzt werden.

## Patentansprüche

1. Verfahren zum Schutz eines impulsbreitengesteuerten Transistor-Gleichspannungswandlers vor zu hohen Spannungen, wobei in einer ersten Vergleichseinrichtung (V1) eine von der Ausgangsspannung abgeleitete Istspannung mit einer ersten Referenzspannung verglichen wird und wobei die Istspannung einem Eingang der ersten Vergleichseinrichtung (V1) und nur die Referenzspannung dem anderen Eingang dieser Vergleichseinrichtung (V1) zugeführt wird, und wobei im Falle ausgangsseitiger Überspannung das Ausgangssignal dieser Vergleichseinrichtung (V1) den Schalttransistor (Ts2) sperrt, dadurch gekennzeichnet, daß eine aus der Eingangsspannung des Gleichspannungswandlers abgeleitete Größe zu der von der Ausgangsspannung abgeleiteten Istspannung hinzugefügt wird, daß die Steuereinheit (PBM) des Schalttransistors (Ts2) derart vom Ausgangssignal der Vergleichseinrichtung (V1) beeinflußt wird, daß der Schalttransistor (Ts2) nur für die Dauer einer ausgangs- und/oder eingangsseitigen Überspannung gesperrt wird und daß nach Wegfall einer Überspannung der Schalttransistor (Ts2) verzögert wieder eingeschaltet wird.

2. Schaltungsanordnung zum Durchführen des Verfahrens nach Anspruch 1, dadurch gekennzeichnet, daß der erste Eingang der ersten Vergleichseinrichtung (V1) sowohl über einen Widerstand (R1) mit der Eingangsspannung als auch mit einer Empfangseinrichtung eines eine aus der Ausgangsspannung abgeleiteten Größe übertragenden Optokopplers (OK) verbunden ist.

3. Schaltungsanordnung nach Anspruch 2, dadurch gekennzeichnet, daß eine zur Ausgangsspannung proportionale Größe an einem ersten Eingang einer zweiten Vergleichseinrichtung (V2) anliegt, daß eine zweite Referenzspannung (Uref) an einem zweiten Eingang der zweiten Vergleichseinrichtung (V2) anliegt und daß der Ausgang letzterer mit der Sendeeinrichtung des Optokopplers (OK) verbunden ist.

## Claims

1. Method for the protection of a pulse-width controlled direct current transistor converter against voltages which are too high, wherein an actual voltage derived from the output voltage is compared with a first reference voltage in a first comparison equipment and wherein the actual voltage is conducted to an input of the first comparison equipment (V1) and only the reference voltage is conducted to the other input of this comparison equipment (V1) and wherein the output signal of this comparison equipment (V1) blocks the switching transistors (Ts2) in the case of an overvoltage at the output side, characterized thereby, that a magnitude derived from the input voltage of the direct current converter is added to the actual voltage derived from the output voltage, that the control unit (PBM) of the switching transistor (Ts2) is influenced by the output signal of the comparison equipment (V1) in such a manner that the switching transistor (Ts2) is blocked only for the duration of an overvoltage at the output side and/or input side and that the switching transistor (Ts2) is switched on again with delay after disappearance of an overvoltage.

2. Circuit arrangement for performance of the method according to claim 1, characterized thereby, that the first input of the first comparison equipment (V1) is connected through a resistor (R1) with the input voltage as well as also with a receiving equipment of an optical coupler (OK) transmitting a magnitude derived from the output voltage.

3. Circuit arrangement according to claim 2, characterized thereby, that a magnitude proportional to the output is present at a first input of a second comparison equipment (V2), that a second reference voltage (Uref) is present at a second input of the second comparison equipment (V2) and that the output of the latter is connected with the sending equipment of the optical coupler (OK).

**Revendications**

1. Procédé de protection d'un onduleur transistorisé à commande de largeur d'impulsion contre les tensions excessives, dans lequel une tension réelle, dérivée de la tension de sortie, est comparée à une première tension de référence dans un premier dispositif de comparaison (V1) et dans lequel la tension réelle est appliquée à une entrée du premier dispositif de comparaison (V1), tandis que seule la tension de référence est appliquée à l'autre entrée de ce dispositif de comparaison (V1) et dans lequel, en cas de surtension du côté de la sortie, le signal de sortie de ce dispositif de comparaison V1 coupe le transistor de commutation (Ts2), caractérisé en ce qu'une grandeur dérivée de la tension d'entrée de l'onduleur est ajoutée à la tension réelle, dérivée de la tension de sortie, que l'unité de commande PBM du transistor de commutation (Ts2) est influencée par le signal de sortie du dispositif de comparaison (V1), de façon à ce que le transistor de commutation (Ts2) ne soit coupé que pendant la durée d'une surtension du côté de la sortie et/ou de l'entrée et que, après disparition de cette surtension, le transistor de commutation (Ts2) soit réenclenché avec retard.

2. Dispositif de commutation pour la réalisation du procédé selon la revendication 1, caractérisé en ce que la première entrée du premier dispositif de comparaison (V1) est reliée par une résistance (R1) à la tension d'entrée, ainsi qu'à un dispositif de réception d'un coupleur opto OK transmettant une grandeur dérivée de la tension de sortie.

3. Dispositif de commutation selon la revendication 2, caractérisé en ce qu'une grandeur proportionnelle à la tension de sortie est appliquée à une première entrée d'un second dispositif de comparaison (V2), qu'une seconde tension de référence (Uref) est appliquée à une seconde entrée du second dispositif de comparaison (V2) et que la sortie de ce dernier est reliée au dispositif d'émission du coupleur opto OK.

UA

D3

Tr1

Ts 2

astab. Multi-vibrator

Treiber-stufe

PBM

V1

R4

R1

R5

V2

OK

D4

Spannungs-regler

Strom-regler

D2

R3

Ts1

OK

D1

R2

C2

+